Europäisches Patentamt

**European Patent Office**

**Office européen des brevets**

(19)

(11) Publication number : **0 485 071 A2**

(12) **EUROPEAN PATENT APPLICATION**

(21) Application number : **91309182.3**

(22) Date of filing : **07.10.91**

(51) Int. Cl.⁵ : **H04B 13/02, H04B 10/10**

Priority 120491 BR 9005005 Complete Specification.

(30) Priority : **05.10.90 BR 9005005**

(43) Date of publication of application : **13.05.92 Bulletin 92/20**

(84) Designated Contracting States : **DK ES FR GB IT**

(71) Applicant : **PETROLEO BRASILEIRO S.A. PETROBRAS**
**Avenida Republica do Chile, 65**
**Rio de Janeiro (BR)**

(71) Applicant : **PONTIFICIA UNIVERSIDADE CATOLICA - PUC**
**Rue Marques de Sao Vicente no 225**
**Rio de Janeiro (BR)**

(72) Inventor : **Sant'Anna, Antonio Claudio Correia Meyer**
**Rua Desenhista Luiz Guimaraes, No. 87**
**Rio de Janeiro (BR)**
Inventor : **Einzembert, Robert**
**Rua Ribeiro Guimaraes, No. 217/1304**
**Rio de Janeiro (BR)**
Inventor : **Von der Weild, Jean Pierre**
**Rua Oliveira Rocha, No. 46/101**
**Rio de Janeiro (BR)**
Inventor : **Passy, Rogerio**
**Rua Maestro Francisco Braga, No. 42/204**
**Rio de Janeiro (BR)**

(74) Representative : **Barlow, Roy James et al**
**J.A. KEMP & CO. 14, South Square, Gray's Inn**
**London WC1R 5LX (GB)**

(54) **Undersea communication system.**

(57) This invention concerns a subsea communication system with use of physical environment, for transmitting signals over short distances, consisting of a first part (1) placed in some kind of unit, with an optical transmitter/receiver inside it and a transparent window (2) in its side, and a second smaller part (3), connected by a lead (4) to the other point with which communication is to be made, said second part (3) having an optical transmitter/receiver inside it as well, and a transparent window (5), communication between said first part (1) and second part (3) taking lace by the sending of a luminous beam (6) from one part to the other, through the aforesaid windows (2,5) and the surrounding physical environment (7).

FIG 1

EP 0 485 071 A2

This invention concerns an undersea communication system for the communication of data by means of signals transmitted over short distances (a few millimeters or centimeters), thereby giving rise to an "undersea optical array" able to transmit data, through the use of beams of electromagnetic waves, bringing about communication between two submerged points apart from one another.

As is known by those versed in the art, exploring for petroleum in an undersea environment calls for the use of submerged equipment which requires an exchange of information among their individual modules, or with floating support surface units as well, and the chief problem in the transmitting of signals among such submerged equipment or modules is that leads and connectors (pins and sockets in the language of those not specialized in the art) have to be employed. Such connectors usually consist of pins that fit into sockets, rather like an electric outlet in a household. Such method does not solve the problem entirely because it is very difficult to prevent water from getting into the space between the pins and sockets, so that short-circuits are all too frequent. A more recent answer found to the problem has been to use inductive connectors, whereby the signals are turned into magnetic fields, so that the pin need only be brought close to the socket, without there being any electrical contact between the two, and magnetic coupling leads to the signals being transferred from one side to the other.

Under the invention dealt with herein there is an undersea communication system which makes use of the surrounding physical environment for the transmission of signals over short distances (a few millimeters or centimeters), both sides of what would be the pin and socket being provided with transparent faces so that when brought close to one another a beam of light is transferred from one side to the other, thus enabling signals to be sent.

The undersea communication system dealt with in this invention consists of a sealed first part containing an optical transmitter/receiver and with a transparent window in its side, and of a second part smaller than the first which is connected by means of a lead to the other point with which communication is to take place, provided inside with an optical transmitter/receiver and a transparent window, communication between the first and second part being achieved through the transfer of a beam of light from one part to the other by means of the transparent windows whenever the second part is brought close, as well as by means of the physical environment, which is the sea water in the case in point.

The invention will further be understood from the following description, when taken together with the attached drawings, which are given by way of example only, and in which:

Figure 1 shows undersea communication between first and second parts, as in the system herewith invented; and

Figure 2 is a diagrammatic view of how the undersea communication system works.

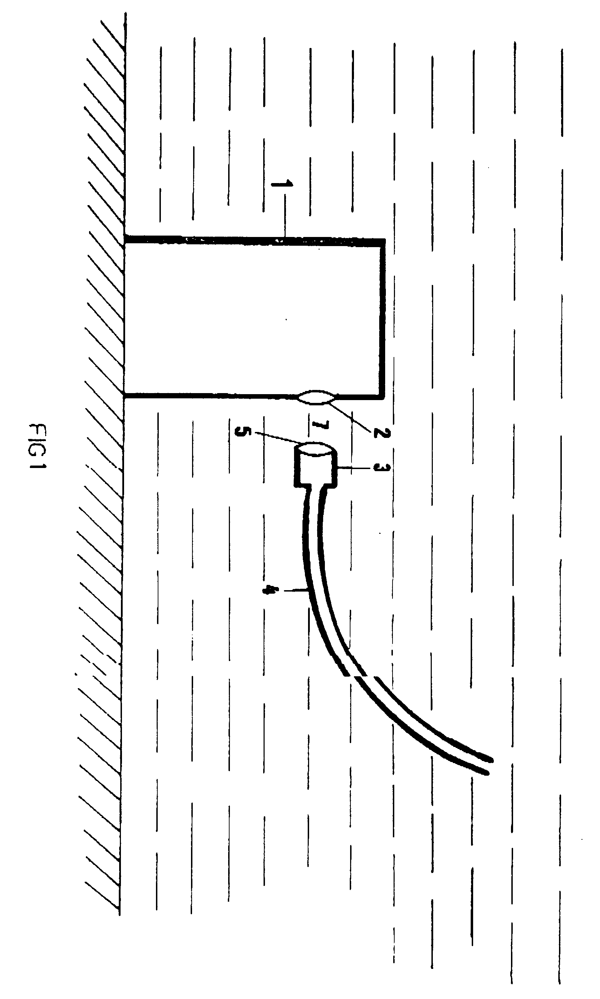

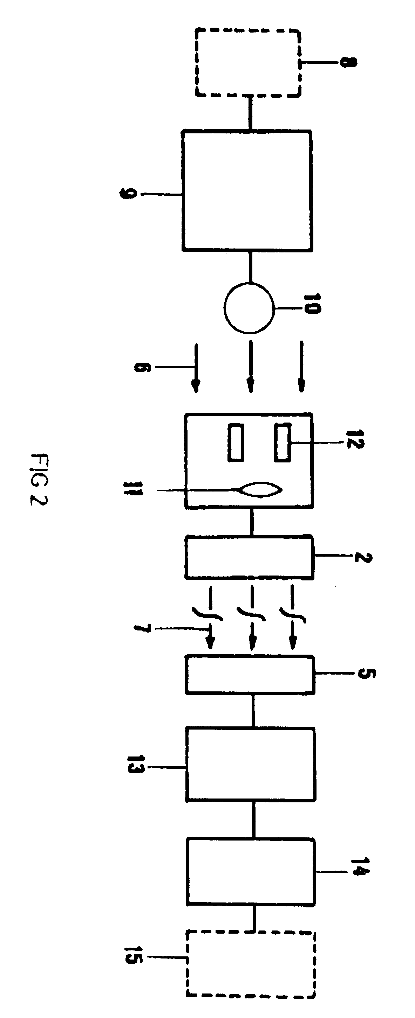

As shown in Figures 1 and 2 the undersea communication system for the sending of data by transmitting signals over short distances, which has given rise to an undersea optical connector able to transmit data, consists of a first part, 1, placed in some kind of unit which has a sealed off space within it containing an optical transmitter/receiver and a transparent window, 2, in its side, and a second smaller part, 3, connected by a lead, 4, to the other point with which it is desired to communicate, provided with an optical transmitter/receiver inside it as well and with a transparent window, 5, communication between the first part, 1, and the second part, 3, being achieved by the sending of a beam of light, 6, from one part to the other, through the transparent windows, 2 and 5, and through the surrounding physical environment, 7, which in the case in point, is the water of the sea.

As shown in Figure 2, the data source, 8, is inserted into the first part, 1, which has a sealed off part inside it containing a communications link made up basically of an electronic demodulation unit (modulator/demodulator), 9, which mixes the information to be sent, with a carrier frequency signal then going on to a luminous emitter, 10, which throws an optical beam, 6, through lens, 11, and collimator, 12, said optical beam, 6, then passing through transparent window, 2, physical environment, 7, and entering second part, 3, through transparent window, 5, towards optical emitter/receiver, 13, and then to a demodulation control unit, 14, bound for data input and output source, 15.

## Claims

1. A subsea communication system for transmitting signals over short distances, giving rise to an "undersea optical connector" able to transmit data characterised by comprising:-

a first part (1) enclosed in a unit with an optical transmitter/receiver, inside it said unit enclosing a first transparent window (2) to the exterior; and,

a second smaller part (3) connected to a signal transmitting lead (4) through which communication is to take place, said second part (3) also enclosing an optical transmitter/receiver in register with a second transparent window (5), whereby communication between said first part (1) and second part (3) takes place by the emission of a luminous beam (6) from one part to the other, through the aforesaid windows (2,5) and the physical environment (7).

2. A subsea communication system according to claim 1 whereby a data source (8) is inserted in said first part (1) together with a communication link made up of an electronic demodulation unit (9) which mixes information to be sent with a carrier frequency, and a luminous emitter (10) connected to receive the signal from said electronic demodulation unit (9) and to direct an optical beam (6) through a lens (11) and collimator (12) to pass through said transparent window (2) and the physical environment (7) outside said unit (1) to enter said second part (3) through said second transparent window (5), towards an optical emitter/receiver (13) and then a demodulation control unit (14) connected to a data input/output source (15).

3. A subsea communication system according to claim 3, characterised in that said electronic demodulation unit (9) consists of a modulator/demodulator.

4. A subsea communication system according to any one of claims 1 to 4, characterised in that said physical environment (7) consists of the water of the sea.

5. A subsea communication system environment, according to any preceding claim characterised in that said first part (1) is provided with a sealed off place inside it.

FIG 1

FIG 2